# EUROPEAN PATENT SPECIFICATION

(11) **EP 2 871 505 B1**
(45) Date of publication and mention of the grant of the patent: **30.09.2020**
(21) Application number: 14192314.4
(22) Date of filing: 07.11.2014
(51) Int. Cl.: G02B 6/44

(54) **Apparatus for vertically guiding optical waveguide cables and for vertically storing excess lengths of the optical waveguide cable**
Vorrichtung zur vertikalen Führung von Lichtwellenleiterkabeln und zur vertikalen Aufbewahrung von überschüssigen Längen des Lichtwellenleiterkabels
Appareil pour guider verticalement des câbles de guide d'ondes optiques et servant à stocker les longueurs excessives dudit câble

(30) Priority: 08.11.2013 DE 202013010110 U
(43) Date of publication of application: 13.05.2015
(73) Proprietor: Corning Optical Communications LLC, Charlotte, NC 28216 (US)
(72) Inventor: Gralewski-Sek, Grzegorz, 91-849 Lodz (PL); Strunck, Sven, Dipl. Wi. Ing., 13129 Berlin (DE)
(74) Representative: Sturm, Christoph

(56) References cited:
- WO-A2-01/96921
- US-A1- 2002 131 750
- US-A1- 2010 133 391
- US-B1- 6 347 714

## Description

The invention relates to an apparatus for vertically guiding optical waveguide cables and for vertically storing excess lengths of the optical waveguide cables within an optical waveguide distributor device. The invention further relates to an optical waveguide distributor device.

When constructing data transmission networks from optical waveguides, it is necessary to connect the optical waveguides to one another. Connection points of this kind have to be handled both outside buildings and also within buildings. Outside buildings, connection points are accommodated between optical waveguides in so-called cable sleeves or road distribution devices. Within buildings, connection points between optical waveguides are handled in so-called distributor cabinets or distributor frames.

Optical waveguide distributor devices which are known from practice and are in the form of distributor cabinets or distributor frames have a frame and a supporting element which is mounted on the frame and on which assemblies such as cassettes for receiving spliced connections and/or patch connections between optical waveguides are mounted. The supporting element of the optical waveguide distributor device is also called an assembly support and can be mounted on the frame of said assembly support such that it can pivot or in a fixed manner.

An optical waveguide distributor device having a frame, which is called the basic frame, and a supporting element, which is in the form of a pivoting frame and is accordingly mounted on the frame in a pivotable manner, is known from DE 20 2004 012 696 U1.

DE 20 2004 012 696 U1 further discloses that the frame of the distributor device on which the supporting element is fitted is formed from vertical beams and horizontal beams, openings being formed in the region of an upper wall of the frame, which upper wall extends between upper horizontal beams, it being possible for optical waveguide cables to be inserted into the frame via the said openings.

DE 20 2004 012 696 U1 further shows that firstly the guide elements for horizontal guidance are positioned at the top and bottom of the supporting element which is in the form of a pivoting frame, and guide elements for vertically guiding optical waveguide cables are positioned laterally on the supporting element which is in the form of a pivoting frame, it being possible for said guide elements to pivot together with the pivoting frame.

US 8,127,941 B2 discloses an apparatus for vertically guiding optical waveguide cables and for vertically storing excess lengths of the said optical waveguide cables within an optical waveguide distributor device which has a base body which can be mounted in a fixed manner in the optical waveguide distributor device and to which a plurality of guide elements for vertically guiding optical waveguide cables and for vertically supporting excess lengths of the said optical waveguide cables are fastened.

US 2001/131750 A1, US 6 347 714 B1, WO 01/96921 A2 and US 2010/133391 A1 disclose other apparatuses for guiding optical waveguide cables according to the prior art.

Although apparatuses with the aid of which optical waveguide cables are vertically guided in a defined manner within an optical waveguide distributor device and excess lengths of said optical waveguide cables can be vertically stored in a defined manner are already known from the prior art, there is a need for a novel apparatus for vertically guiding optical waveguide cables and for vertically storing excess lengths of the said waveguide cable which, together with a high packing density of optical waveguide cables which are to be guided and of excess lengths which are to be stored, allows the optical waveguide cables and also the excess lengths of the said optical waveguide cables to be handled in a visible and easily accessible manner within the optical waveguide distributor device.

Proceeding from the above, the present application is based on the object of providing a novel apparatus for vertically guiding optical waveguide cables and for vertically storing excess lengths of the optical waveguide cables in the region of an optical waveguide distributor device, and also of providing an optical waveguide distributor device.

The said object is achieved by an apparatus according to Claim 1.

The apparatus according to the invention for vertically guiding optical waveguide cables and for vertically storing excess lengths of the said optical waveguide cables also allows visible handling of the optical waveguide cables and of the excess lengths of the said optical waveguide cables when, given a high packing density, a large number of optical waveguide cables and also excess lengths of the said optical waveguide cables have to be handled within the optical waveguide distributor device. In particular, it is possible to group or to handle the optical waveguide cables on the different base bodies in such a way that optical waveguide cables of this kind and also excess lengths of the said optical waveguide cables, which run exclusively within the optical waveguide distributor device, can be handled on the first, rear base body, whereas optical waveguide cables of this kind and also excess lengths of the said optical waveguide cables, which run between assemblies within the optical waveguide distributor device and assemblies outside the said optical waveguide distributor device, can be handled on the second, front base body.

The invention allows particularly advantageous handling of a large number of optical waveguide cables within an optical waveguide distributor device and also uncomplicated access to the optical waveguide cables which are guided on the base bodies which are positioned one behind the other and also to excess lengths of the said optical waveguide cables.

According to an advantageous development of the invention, recesses are made in the second, front base body, said recesses at least partially clearing a view, namely providing a partially free view, to the second guide elements of the first, rear base body.

The optical waveguide distributor device according to the invention is defined in Claim 11.

Preferred developments of the invention can be gathered from the dependent claims and the following description. Exemplary embodiments will be explained in greater detail below with reference to the drawing, in which:
- Fig. 1: shows a front view of an apparatus according to the invention for vertically guiding optical waveguide cables and for vertically storing excess lengths of the optical waveguide cables;
- Fig. 2: shows a first perspective view of the apparatus of Fig. 1;
- Fig. 3: shows a second perspective view of the apparatus of Fig. 1;
- Fig. 4: shows a front view of a first detail of the apparatus of Fig. 1;
- Fig. 5: shows a perspective view of the detail of Fig. 4;
- Fig. 6: shows a front view of a second detail of the apparatus of Fig. 1;
- Fig. 7: shows a perspective view of the detail of Fig. 6;
- Fig. 8: shows a front view of an optical waveguide distributor device together with an apparatus according to Fig. 1 which is mounted in the said optical waveguide distributor device; and
- Fig. 9: shows a detail of the optical waveguide distributor device of Fig. 1.

The present invention relates to an apparatus for vertically guiding optical waveguide cables and for vertically storing excess lengths of the optical waveguide cables in the region of an optical waveguide distributor device. The invention further relates to an optical waveguide distributor device.

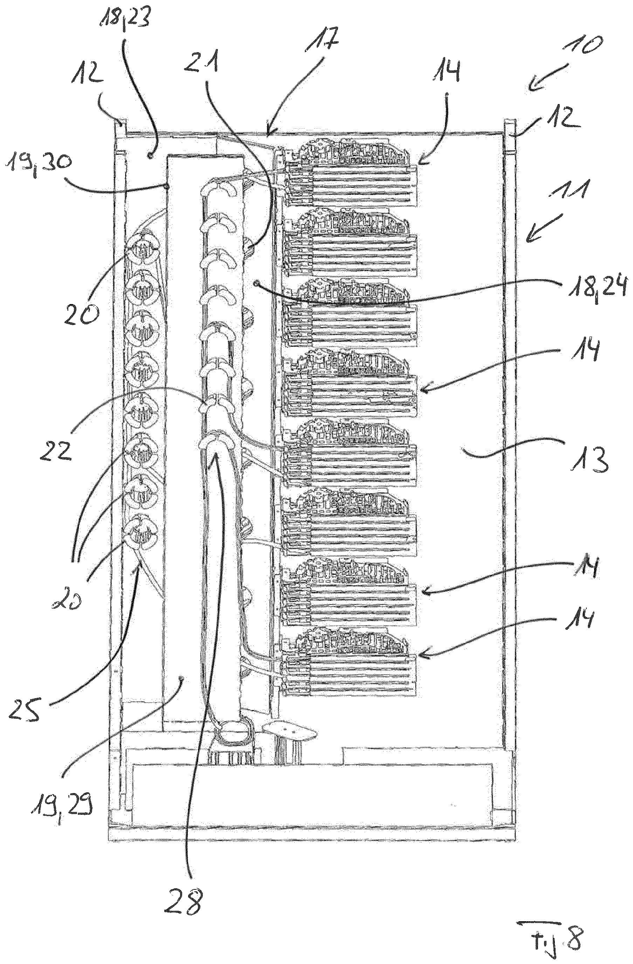

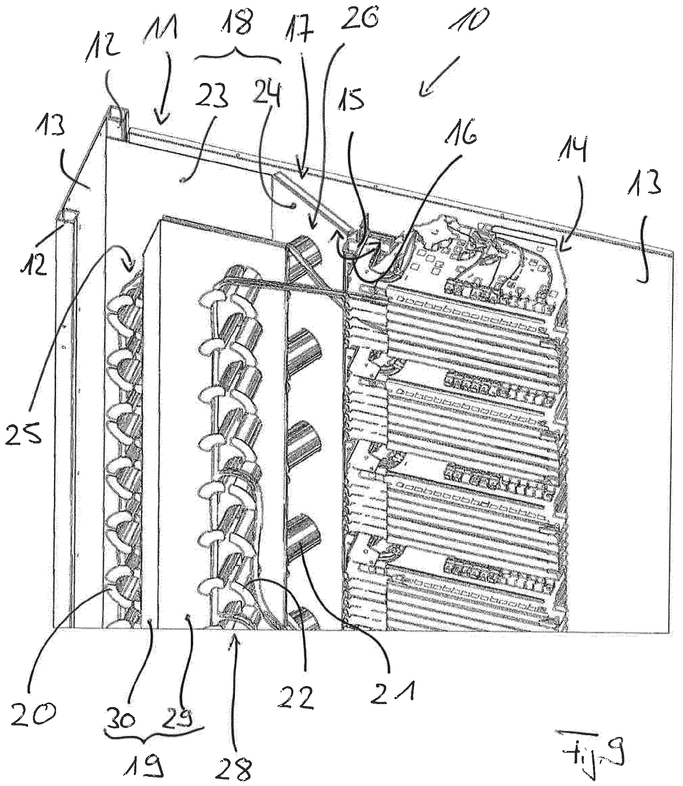

Figs. 8 and 9 show different views of an optical waveguide distributor device 10 for handling connection points between optical waveguides which are guided in optical waveguide cables, wherein the optical waveguide distributor device 10 of Figs. 8 and 9 has a frame 11 which, in the exemplary embodiment shown, is formed from beams 12 and from walls 13 which extend between the beams 12.

Assemblies 14 for receiving connections are positioned between optical waveguide cables in the frame 11 of the optical waveguide distributor device 10, the said assemblies 14 being splicing cassettes in the exemplary embodiment which is shown in Figs. 8 and 9, the said assemblies being arranged vertically one above the other so as to form a plurality of splicing cassette stacks and serving to receive spliced connections between optical waveguides according to Fig. 8. In this case, the splicing cassettes 14 can be pivoted individually about a vertical axis 15 in a manner following the double-headed arrow 16 which is shown in Fig. 9 in order to allow access to the spliced connections which are stored in the individual splicing cassettes 14 between optical waveguides. Assemblies which serve to handle patch connections between optical waveguides which are guided in optical waveguide cables can also be fastened to the frame 11.

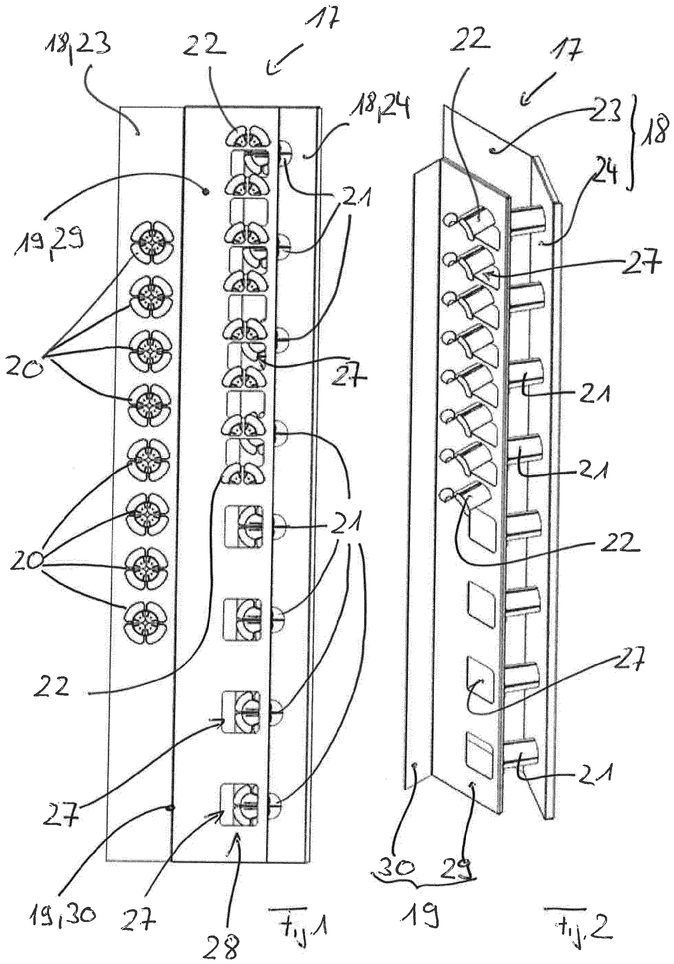

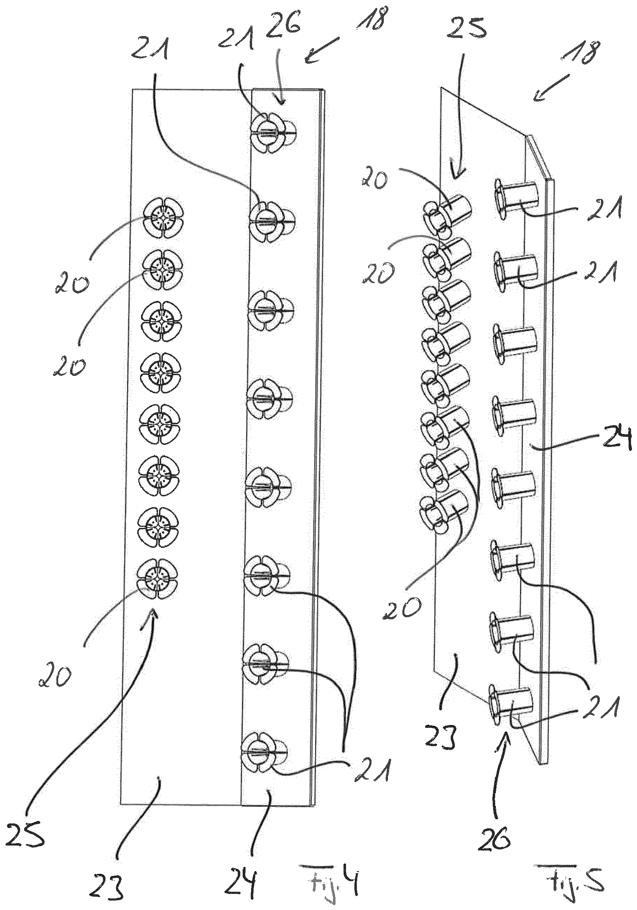

In the optical waveguide distributor device 10 of Figs. 8 and 9, an apparatus 17 according to the invention for vertically guiding optical waveguide cables and for vertically storing excess lengths of the optical waveguide cables is positioned within the optical waveguide distributor device 10. Figs. 1 to 3 show the said apparatus 17 for vertically guiding optical waveguide cables and for vertically storing excess lengths of the said optical waveguide cables on their own; Figs. 4, 5 and Figs. 6, 7 show details of the apparatus 17.

The apparatus 17 according to the invention has a first, rear base body 18 which can be mounted or is mounted in the optical waveguide distributor device 10 and, in the mounted state, extends adjacent to a rear face or rear wall of the optical waveguide distributor device 10, and also a second, front base body 19 which likewise can be mounted or is mounted in the optical waveguide distributor device 10 and, in the mounted state, extends adjacent to a front face of the optical waveguide distributor device 10 and accordingly is positioned in front of the first, rear base body 18.

The first, rear base body 18 and the second, front base body 19 are each mounted within the optical waveguide distributor device 10 with a vertical orientation in a fixed and therefore non-pivotable manner. The relative position of the two base bodies 18, 19 in relation to one another and also to the frame 11 of the optical waveguide distributor device 10 is fixed and accordingly cannot be changed.

A plurality of guide elements 20, 21 for vertically guiding optical waveguide cables and for vertically storing excess lengths of the said optical waveguide cables in a first, vertical plane are fastened to a front wall of the first, rear base body 18, a plurality of guide elements 22 for vertically guiding optical waveguide cables and for vertically storing excess lengths of said optical waveguide cables in a second, vertical plane being fastened to a front wall of the second, front base body 19.

In this case, the second, front base body 19 has a smaller width than the first, rear base body 18, so that the optical waveguide cables which are guided on the guide elements 20, 21 and the excess lengths of the said optical waveguide cables which are stored on these guide elements 20, 21 are accessible from the front face of the optical waveguide distributor device 10.

As can best be gathered from Figs. 1 and 2, a height of the second, front base body 19 corresponds to a height of the first, rear base body 18. However, the width of the second, front base body 19 is smaller than the width of the first, rear base body 18 in such a way that the first, rear base body 18 protrudes laterally in terms of width on both sides in relation to the second, front base body 19. As a result, it is accordingly possible to access the optical waveguide cables which are handled on the rear base body 18 and also excess lengths of said optical waveguide cables from the front face of the optical waveguide distributor device 10 past the second, front base body 19 both from the left and also from the right.

The first, rear base body 18 of the apparatus 17 according to the invention has two sections 23, 24 which are angled in relation to one another, first guide elements 20 being fastened to a first section 23 of the first, rear base body 18, second guide elements 21 being fastened to a second section 24 of the first, rear base body 18. In this case, the first guide elements 20, which are fastened to the first section 23 of the first, rear base body 18, are grouped in a first vertical row 25, and the second guide elements 21, which are fastened to the second section 24 of the first, rear base body 18, are grouped in a second vertical row 26, the vertical spacing between the first guide elements 20, which are positioned in the row 25, differing from the vertical spacing between the second guide elements 21 which are positioned in the row 26, as can best be gathered from Figs. 4 and 5. In this case, the spacing between the second guide elements 21 of the second row 26 is greater than the vertical spacing between the first guide elements 20 of the first row 25.

The first section 23 of the first, rear base body 18, on which the first guide elements 20 are mounted with the relatively small vertical distance between them, in the mounted state, extends parallel to the rear face of the optical waveguide distributor device 10. The second section 24 of the first, rear base body 18, on which the second guide elements 21 are mounted with the relatively small vertical distance between them, in the mounted state, extends obliquely to the first section 23 and therefore at an oblique angle to the rear face of the optical waveguide distributor device 10, as can best be gathered from Fig. 9, this second section 24 of the first, rear base body 18, proceeding from the first section 23 of said base body, running obliquely forward, that is to say away from the rear face of the optical waveguide distributor device 10 in the direction of the front face of the said optical waveguide distributor device. The vertical axis 15, about which the splicing cassettes 14 can be pivoted in a manner following the double-headed arrow 16, is formed on a free, vertical edge of the said second section 24 of the first, rear base body 18.

In this case, the first section 23 and the second section 24 of the first, rear base body 18 form an obtuse angle, which is preferably greater than 120°. The obtuse angle between the two sections 23 and 24 of the first, rear base body 18 is preferably between 130° and 170°.

The second, front base body 19 is positioned in front of the first, rear base body 18 in such a way that the second, front base body 19 does not conceal the first guide elements 20 which are fastened to the first section 23 of the first, rear base body 18 as seen from the front face of the optical waveguide distributor device 10 but rather at least partially conceals the second guide elements 21 which are fastened to the second section 24 of the first, rear base body 18. This can best be gathered from Fig. 1. In this case, recesses 27 are made in the second, front base body 19, said recesses at least partially providing a view to the second guide elements 21 of the first base body 18 making the second guide element 21 visible from the front of the optical waveguide distribution device 10. In Figs. 8, 9, the said recesses 27 are not formed in the second, front base body 19 of the apparatus 17 but rather only the guide elements 22 are fastened to the said second, front base body.

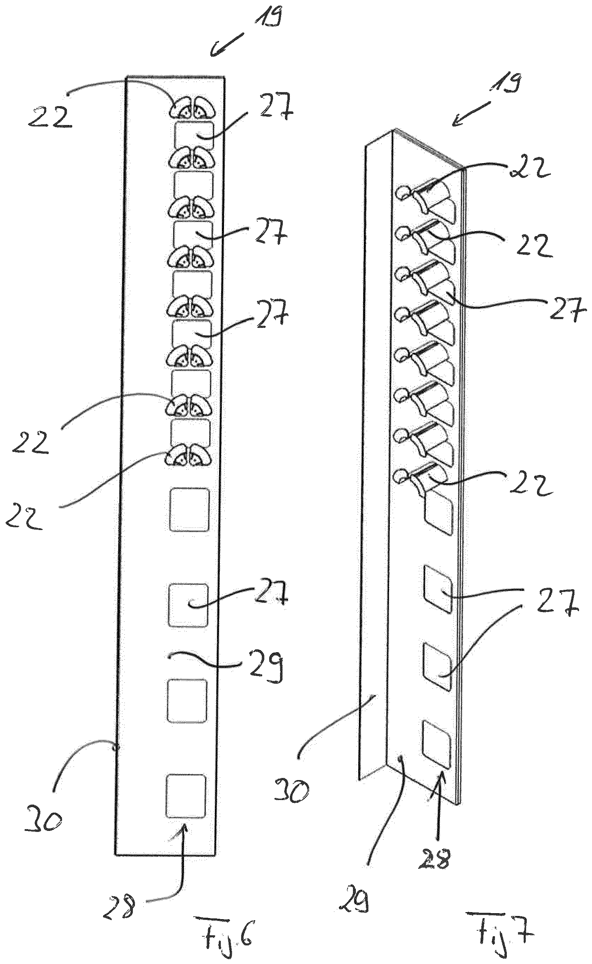

When, as shown in Figs. 1 to 7, the recesses 27 are made in the second, front base body 19 of the apparatus 17, the recesses 27, together with the guide elements 22 which are fastened to the said second, front base body 19, are arranged in a vertical row 28. In this case, as can best be gathered from Figs. 6 and 7, the guide elements 22 are mounted exclusively in an upper region of the second, front base body 19, whereas the recesses 27 are formed in the second, front base body 19 over the entire height of the said second, front base body. In the upper region of the said second, front base body, in which upper region the guide elements 22 are also positioned, the recesses 27 in this case have a lower height than in the lower region in which no guide elements 22 are mounted on the second, front base body 19 of the apparatus 17.

The second, front base body 19 of the apparatus 17 has two sections which are angled in relation to one another. The guide elements 22, and in Figs. 1 to 7 also the recesses 27, are mounted or formed on a first section 29 of the second, front base body 19, a second section 30 running at a right angle in relation to the first section 29, specifically at the front in the direction of the front face of the optical waveguide distributor device 10.

The second, front base body 19, specifically the section 29 of the said second, front base body, on which the guide elements 22 are mounted, extends, in the mounted state, parallel to the first section 23 of the first, rear base body 18 and therefore parallel to the rear face of the optical waveguide distributor device 10.

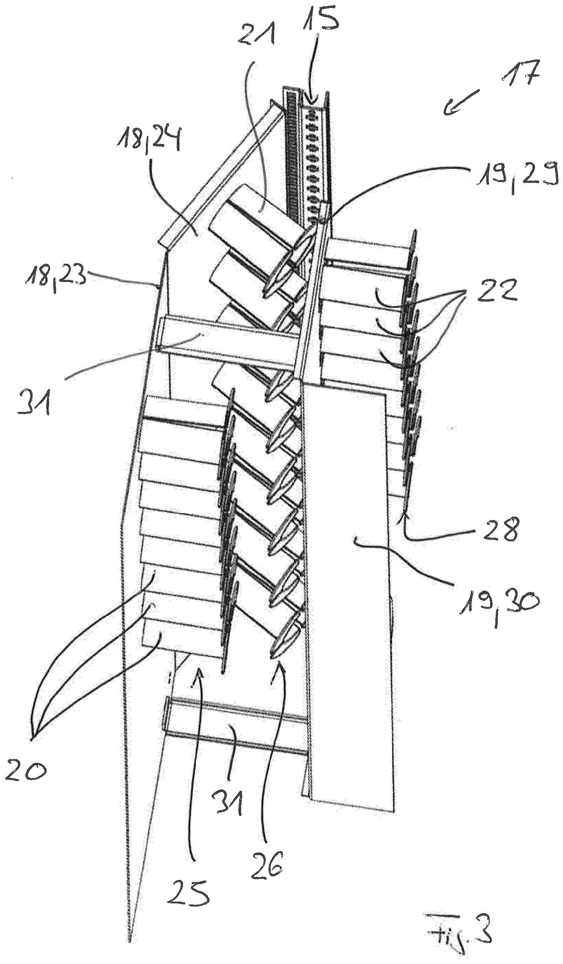

As already mentioned, the two base bodies 18, 19 of the apparatus 17 according to the invention for vertically guiding optical waveguide cables and for vertically storing excess lengths of the said optical waveguide cables are mounted within the optical waveguide distributor device 10 in a fixed and therefore non-pivotable manner, the first, rear base body 18 being mounted on a wall 13 which extends in the region of the rear face of the optical waveguide distributor device 10, and the second, front base body 19 being mounted on the first, rear base body 18, specifically by means of fastening struts 31 which extend between the first section 29 of the second, front base body 19 and the first section 23 of the first, rear base body 18. These fastening struts 31 are shown in Fig. 3, but not in Figs. 2 and 9.

In particular, optical waveguide cables which run exclusively between the assemblies 14, which are arranged in one and the same optical waveguide distributor device 10 and which are accordingly not routed into the optical waveguide distributor device 10 or routed out of the said optical waveguide distributor device, are guided on the guide elements 20, 21 of the first, rear base body 18.

In contrast, optical waveguide cables which run between an assembly 14, which is positioned within the optical waveguide distributor device 10, and an assembly which is positioned outside the said optical waveguide distributor device, and which therefore are either routed into the optical waveguide distributor device 10 or routed out of the said optical waveguide distributor device, are preferably guided on the guide elements 22 of the second, front base body 19.

As can be gathered from Fig. 9, the apparatus 17 for vertically guiding optical waveguide cables and for vertically storing excess lengths of the said optical waveguide cables is positioned on the frame 11 of the optical waveguide distributor device 10 laterally next to the assemblies 14 which serve to receive the spliced connections and/or patch connections in such a way that the second section 24 of the first, rear base body 18 is arranged adjacent to the assemblies 14, so that the optical waveguide cables which are guided on the guide elements 20, 21 of the first, rear base body 18 can be supplied in a defined manner via the obliquely angled, second section 24 of the first, rear base body 18 to the assemblies 14 which serve to receive the spliced connections and/or patch connections.

The two base bodies 18, 20 are preferably plate-like elements which are composed of metal. The guide elements 20, 21 and 22 which are fastened to the said base bodies are preferably produced from plastic.

### List of reference symbols

- 10: Optical waveguide distributor device
- 11: Frame
- 12: Beam
- 13: Wall
- 14: Assemblies
- 15: Axis
- 16: Arrow
- 17: Apparatus
- 18: Base body
- 19: Base body
- 20: Guide element
- 21: Guide element
- 22: Guide element
- 23: Section
- 24: Section
- 25: Row
- 26: Row
- 27: Recess
- 28: Row
- 29: Section
- 30: Section
- 31: Fastening strut

## Claims

1. Apparatus (17) for vertically guiding optical waveguide cables and for vertically storing excess lengths of the said optical waveguide cables within an optical waveguide distributor device,
having a first, rear base body (18) which can be mounted in the optical waveguide distributor device and which, in the mounted state, extends adjacent to a rear face of the optical waveguide distributor device, and
having a second, front base body (19) which can likewise be mounted in the optical waveguide distributor device and which, in the mounted state, extends adjacent to a front face of the optical waveguide distributor device,
wherein the first, rear base body (18) and the second, front base body (19) are configured to be mounted within the optical waveguide distributor device with a vertical orientation in a fixed and therefore non-pivotable manner, and
wherein a plurality of guide elements (20, 21) for guiding optical waveguide cables and for storing excess lengths of the said optical waveguide cables in a first vertical plane are fastened to a front wall of the first, rear base body (18), and a plurality of guide elements (22) for guiding optical waveguide cables and for storing excess lengths of the said optical waveguide cables in a second vertical plane are fastened to a front wall of the second, front base body (19), the second, front base body (19) having a smaller width than the first, rear base body (18), so that the optical waveguide cables which are guided on the guide elements (20, 21) of the first, rear base body (18) and stored excess lengths of the said optical waveguide cables are accessible from the front face of the optical waveguide distributor device,
**characterized in that**
the first, rear base body (18) has two sections (23, 24) which are angled in relation to one another, first guide elements (20) being fastened to a first section (23) of the first, rear base body (18), and second guide elements (21) being fastened to a second section (24) of the first, rear base body (18), and
the apparatus further comprises fastening struts (31),
wherein the second, front base body (19) is configured to be mounted on the first, rear base body (18) by means of the fastening struts (31) which extend between the first section (23) of the first, rear base body (18) and a first section (29) of the second, front base body (19), wherein the first section (29) of the second, front base body (19) extends in the mounted state parallel to the first section (23) of the first, rear base body (18),
wherein the second, front base body (19) is positioned in front of the first, rear base body (18) in such a way that the second, front base body (19) does not conceal the first guide elements (20) which are fastened to the first section (23) of the first, rear base body (18) but rather at least partially conceals the second guide elements (21) which are fastened to the second section (24) of the first, rear base body (18).

2. Apparatus according to Claim 1, **characterized in that** a height of the second, front base body (19) corresponds to a height of the first, rear base body (18) .

3. Apparatus according to Claim 1 or 2, **characterized in that** the first, rear base body (18) protrudes laterally in terms of width on both sides in relation to the second, front base body (19).

4. Apparatus according to one of Claims 1 to 3, characterized the first guide elements (20) are arranged in a first vertical row (25), and the second guide elements (21) are arranged in a second vertical row (26).

5. Apparatus according to Claim 4, **characterized in that** the vertical spacing between the first guide elements (20) in the first vertical row (25) differs from the vertical spacing between the second guide elements (21) in the second vertical row (26).

6. Apparatus according to one of Claims 1 to 5, characterized the first section (23) of the first, rear base body (18), in the mounted state, extends parallel to the rear face of the optical waveguide distributor device, and in that the second section (24) of the first, rear base body (18), in the mounted state, extends obliquely to the rear face of the optical waveguide distributor device.

7. Apparatus according to Claim 6, **characterized in that** the first section (23) of the first, rear base body (18) and the second section (24) of the first, rear base body (18) form an obtuse angle of more than 120°.

8. Apparatus according to one of Claims 1 to 7, **characterized in that** recesses (27) are made in the second, front base body (19), said recesses at least partially providing a view to the second guide elements (21) of the first, rear base body (18).

9. Apparatus according to Claim 8, **characterized in that** the recesses (27) which are made in the second, front base body (19) and the guide elements (22) which are fastened to the said second, front base body are arranged in a vertical row (28).

10. Apparatus according to one of Claims 1 to 9, **characterized in that** the second, front base body (19) has two sections which are angled in relation to one another, the guide elements (22) being fastened to the first section (29) of the second, front base body (19), and a second section (30) running at a right angle in relation to the first section (29), specifically at the front in the direction of the front face of the optical waveguide distributor device.

11. Optical waveguide distributor device (10), specifically distributor cabinet or distributor frame, comprising a frame (11) and comprising assemblies (14) for receiving splice connections and/or patch connections, **characterized in that** an apparatus (17) for vertically guiding optical waveguide cables and for vertically storing excess lengths of the said optical waveguide cables within an optical waveguide distributor device according to one of Claims 1 to 10 is mounted on the frame (11) laterally next to the assemblies (14) for receiving the splice connections and/or patch connections.

## Patentansprüche

1. Vorrichtung (17) zur vertikalen Führung von Lichtwellenleiterkabeln und zur vertikalen Ablage von Überlängen der Lichtwellenleiterkabel innerhalb einer Lichtwellenleiterverteilereinrichtung,
mit einem in der Lichtwellenleiterverteilereinrichtung montierbaren ersten, hinteren Grundkörper (18), der sich in montiertem Zustand benachbart zu einer Rückseite der Lichtwellenleiterverteilereinrichtung erstreckt,
mit einem ebenfalls in der Lichtwellenleiterverteilereinrichtung montierbaren zweiten, vorderen Grundkörper (19), der sich in montiertem Zustand benachbart zu einer Vorderseite der Lichtwellenleiterverteilereinrichtung erstreckt,
wobei der erste, hintere Grundkörper (18) und der zweite, vordere Grundkörper (19) dazu ausgestaltet sind, innerhalb der Lichtwellenleiterverteilereinrichtung in vertikaler Ausrichtung fest und damit unschwenkbar montierbar zu sein,
wobei an einer Vorderwand des ersten, hinteren Grundkörpers (18) mehrere Führungselemente (20, 21) zur Führung von Lichtwellenleiterkabeln und zur Ablage von Überlängen der Lichtwellenleiterkabel in einer ersten vertikalen Ebene befestigt sind und an einer Vorderwand des zweiten, vorderen Grundkörpers (19) mehrere Führungselemente (22) zur Führung von Lichtwellenleiterkabeln und zur Ablage von Überlängen der Lichtwellenleiterkabel in einer zweiten vertikalen Ebene befestigt sind, wobei der zweite, vordere Grundkörper (19) eine geringere Breite als der erste, hintere Grundkörper (18) aufweist, sodass die an den Führungselementen (20, 21) des ersten, hinteren Grundkörpers (18) geführten Lichtwellenleiterkabel und abgelegten Überlängen der Lichtwellenleiterkabel von der Vorderseite der Lichtwellenleiterverteilereinrichtung aus zugänglich sind,
**dadurch gekennzeichnet, dass**
der erste, hintere Grundkörper (18) zwei zueinander abgewinkelte Abschnitte (23, 24) aufweist, wobei an einem ersten Abschnitt (23) des ersten, hinteren Grundkörpers (18) erste Führungselemente (20) befestigt sind und an einem zweiten Abschnitt (24) des ersten, hinteren Grundkörpers (18) zweite Führungselemente (21) befestigt sind, und
die Vorrichtung ferner Befestigungsstreben (31) umfasst,
wobei der zweite, vordere Grundkörper (19) mittels der Befestigungsstreben (31), die sich zwischen dem ersten Abschnitt (23) des ersten, hinteren Grundkörpers (18) und einem ersten Abschnitt (29) des zweiten, vorderen Grundkörpers (19) erstrecken, auf dem ersten, hinteren Grundkörper (18) montierbar ist, wobei sich der erste Abschnitt (29) des zweiten, vorderen Grundkörpers (19) in montiertem Zustand parallel zu dem ersten Abschnitt (23) des ersten, hinteren Grundkörpers (18) erstreckt, wobei der zweite, vordere Grundkörper (19) derart vor dem ersten, hinteren Grundkörper (18) positioniert ist, dass der zweite, vordere Grundkörper (19) die an dem ersten Abschnitt (23) des ersten, hinteren Grundkörpers (18) befestigten ersten Führungselemente (20) nicht verdeckt, hingegen die an dem zweiten Abschnitt (24) des ersten, hinteren Grundkörpers (18) befestigten zweiten Führungselemente (21) zumindest teilweise verdeckt.

2. Vorrichtung nach Anspruch 1, **dadurch gekennzeichnet, dass** eine Höhe des zweiten, vorderen Grundkörpers (19) einer Höhe des ersten, hinteren Grundkörpers (18) entspricht.

3. Vorrichtung nach Anspruch 1 oder 2, **dadurch gekennzeichnet, dass** der erste, hintere Grundkörper (18) seitlich in der Breite beidseitig gegenüber dem zweiten, vorderen Grundkörper (19) vorsteht.

4. Vorrichtung nach einem der Ansprüche 1 bis 3, **dadurch gekennzeichnet, dass** die ersten Führungselemente (20) in einer ersten vertikal verlaufenden Reihe (25) und die zweiten Führungselemente (21) in einer zweiten vertikal verlaufenden Reihe (26) angeordnet sind.

5. Vorrichtung nach Anspruch 4, **dadurch gekennzeichnet, dass** der vertikale Abstand zwischen den ersten Führungselementen (20) in der ersten vertikal verlaufenden Reihe (25) vom vertikalen Abstand zwischen den zweiten Führungselementen (21) in der zweiten vertikal verlaufenden Reihe (26) abweicht.

6. Vorrichtung nach einem der Ansprüche 1 bis 5, **dadurch gekennzeichnet, dass** sich der erste Abschnitt (23) des ersten, hinteren Grundkörpers (18) in montiertem Zustand parallel zu der Rückseite der Lichtwellenleiterverteilereinrichtung erstreckt, und dass sich der zweite Abschnitt (24) des ersten, hinteren Grundkörpers (18) in montiertem Zustand schräg zu der Rückseite der Lichtwellenleiterverteilereinrichtung erstreckt.

7. Vorrichtung nach Anspruch 6, **dadurch gekennzeichnet, dass** der erste Abschnitt (23) des ersten, hinteren Grundkörpers (18) und der zweite Abschnitt (24) des ersten, hinteren Grundkörpers (18) einen stumpfen Winkel von mehr als 120° einschließen.

8. Vorrichtung nach einem der Ansprüche 1 bis 7, **dadurch gekennzeichnet, dass** in den zweiten, vorderen Grundkörper (19) Ausnehmungen (27) eingebracht sind, die einen Blick auf die zweiten Führungselemente (21) des ersten, hinteren Grundkörpers (18) zumindest teilweise freigeben.

9. Vorrichtung nach Anspruch 8, **dadurch gekennzeichnet, dass** die in den zweiten, vorderen Grundkörper (19) eingebrachten Ausnehmungen (27) und die an dem zweiten, vorderen Grundkörper befestigten Führungselemente (22) in einer vertikal verlaufenden Reihe (28) angeordnet sind.

10. Vorrichtung nach einem der Ansprüche 1 bis 9, **dadurch gekennzeichnet, dass** der zweite, vordere Grundkörper (19) zwei zueinander abgewinkelte Abschnitte aufweist, wobei an einem ersten Abschnitt (29) des zweiten, vorderen Grundkörpers (19) die Führungselemente (22) befestigt sind, und wobei ein zweiter Abschnitt (30) gegenüber dem ersten Abschnitt (29) rechtwinklig verläuft, nämlich nach vorne in Richtung auf die Vorderseite der Lichtwellenleiterverteilereinrichtung.

11. Lichtwellenleiterverteilereinrichtung (10), nämlich Verteilerschrank oder Verteilergestell, mit einem Rahmen (11) und mit Baugruppen (14) zur Aufnahme von Spleißverbindungen und/oder Patchverbindungen, **dadurch gekennzeichnet, dass** am Rahmen (11) seitlich neben den Baugruppen (14) zur Aufnahme der Spleißverbindungen und/oder Patchverbindungen eine Vorrichtung (17) zur vertikalen Führung von Lichtwellenleiterkabeln und zur vertikalen Ablage von Überlängen der Lichtwellenleiterkabel innerhalb einer Lichtwellenleiterverteilereinrichtung nach einem der Ansprüche 1 bis 10 montiert ist.

## Revendications

1. Appareil (17) destiné à guider verticalement des câbles de guides d'ondes optiques et à ranger verticalement des longueurs excédentaires desdits câbles de guides d'ondes optiques à l'intérieur d'un dispositif répartiteur de guides d'ondes optiques,
comprenant un premier corps arrière (18) de base qui peut être monté dans le dispositif répartiteur de guides d'ondes optiques et qui, à l'état monté, s'étend au voisinage d'une face arrière du dispositif répartiteur de guides d'ondes optiques, et
comprenant un second corps avant (19) de base qui peut pareillement être monté dans le dispositif répartiteur de guides d'ondes optiques et qui, à l'état monté, s'étend au voisinage d'une face avant du dispositif répartiteur de guides d'ondes optiques,
le premier corps arrière (18) de base et le second corps avant (19) de base étant configurés pour être montés à l'intérieur du dispositif répartiteur de guides d'ondes optiques avec une orientation verticale de manière fixe et donc non pivotante, et
une pluralité d'éléments (20, 21) de guidage destinés à guider des câbles de guides d'ondes optiques et à ranger des longueurs excédentaires desdits câbles de guides d'ondes optiques dans un premier plan vertical étant fixée à une paroi avant du premier corps arrière (18) de base, et une pluralité d'éléments (22) de guidage destinés à guider des câbles de guides d'ondes optiques et à ranger des longueurs excédentaires desdits câbles de guides d'ondes optiques dans un second plan vertical étant fixée à une paroi avant du second corps avant (19) de base, le second corps avant (19) de base présentant une plus petite largeur que le premier corps arrière (18) de base, de sorte que les câbles de guides d'ondes optiques qui sont guidés sur les éléments (20, 21) de guidage du premier corps arrière (18) de base et les longueurs excédentaires rangées desdits câbles de guides d'ondes optiques sont accessibles à partir de la face avant du dispositif répartiteur de guides d'ondes optiques,
**caractérisé en ce que**
le premier corps arrière (18) de base est doté de deux sections (23, 24) qui sont inclinées l'une par rapport à l'autre, des premiers éléments (20) de guidage étant fixés à une première section (23) du premier corps arrière (18) de base, et des seconds éléments (21) de guidage étant fixés à une seconde section (24) du premier corps arrière (18) de base, et
l'appareil comporte en outre des étais (31) de fixation,
le second corps avant (19) de base étant configuré pour être monté sur le premier corps arrière (18) de base au moyen des étais (31) de fixation qui s'étendent entre la première section (23) du premier corps arrière (18) de base et une première section (29) du second corps avant (19) de base, la première section (29) du second corps avant (19) de base s'étendant à l'état monté parallèlement à la première section (23) du premier corps arrière (18) de base,
le second corps avant (19) de base étant positionné devant le premier corps arrière (18) de base de telle façon que le second corps avant (19) de base ne cache pas les premiers éléments (20) de guidage qui sont fixés à la première section (23) du premier corps arrière (18) de base, mais cache plutôt au moins partiellement les seconds éléments (21) de guidage qui sont fixés à la seconde section (24) du premier corps arrière (18) de base.

2. Appareil selon la revendication 1, **caractérisé en ce qu'**une hauteur du second corps avant (19) de base correspond à une hauteur du premier corps arrière (18) de base.

3. Appareil selon la revendication 1 ou 2, **caractérisé en ce que** le premier corps arrière (18) de base fait saillie latéralement en termes de largeur des deux côtés par rapport au second corps avant (19) de base.

4. Appareil selon l'une des revendications 1 à 3, **caractérisé en ce que** les premiers éléments (20) de guidage sont agencés en une première rangée verticale (25), et **en ce que** les seconds éléments (21) de guidage sont agencés en une seconde rangée verticale (26).

5. Appareil selon la revendication 4, **caractérisé en ce que** l'espacement vertical entre les premiers éléments (20) de guidage dans la première rangée verticale (25) diffère de l'espacement vertical entre les seconds éléments (21) de guidage dans la seconde rangée verticale (26) .

6. Appareil selon l'une des revendications 1 à 5, **caractérisé en ce que** la première section (23) du premier corps arrière (18) de base, à l'état monté, s'étend parallèlement à la face arrière du dispositif répartiteur de guides d'ondes optiques, et **en ce que** la seconde section (24) du premier corps arrière (18) de base, à l'état monté, s'étend de manière oblique par rapport à la face arrière du dispositif répartiteur de guides d'ondes optiques.

7. Appareil selon la revendication 6, **caractérisé en ce que** la première section (23) du premier corps arrière (18) de base et la seconde section (24) du premier corps arrière (18) de base forment un angle obtus de plus de 120°.

8. Appareil selon l'une des revendications 1 à 7, **caractérisé en ce que** des évidements (27) sont pratiqués dans le second corps avant (19) de base, lesdits évidements donnant au moins partiellement une vue des seconds éléments (21) de guidage du premier corps arrière (18) de base.

9. Appareil selon la revendication 8, **caractérisé en ce que** les évidements (27) qui sont pratiqués dans le second corps avant (19) de base et les éléments (22) de guidage qui sont fixés audit second corps avant de base sont agencés en une rangée verticale (28).

10. Appareil selon l'une des revendications 1 à 9, **caractérisé en ce que** le second corps avant (19) de base est doté de deux sections qui sont inclinées l'une par rapport à l'autre, les éléments (22) de guidage étant fixés à la première section (29) du second corps avant (19) de base, et une seconde section (30) s'étendant à angle droit par rapport à la première section (29), spécifiquement à l'avant dans la direction de la face avant du dispositif répartiteur de guides d'ondes optiques.

11. Dispositif répartiteur (10) de guides d'ondes optiques, spécifiquement coffret répartiteur ou châssis répartiteur, comportant un bâti (11) et comportant des ensembles (14) destinés à recevoir des connexions à épissure et/ou des connexions à raccordement, **caractérisé en ce qu'**un appareil (17) destiné à guider verticalement des câbles de guides d'ondes optiques et à ranger verticalement des longueurs excédentaires desdits câbles de guides d'ondes optiques à l'intérieur d'un dispositif répartiteur de guides d'ondes optiques selon l'une des revendications 1 à 10 est monté sur le bâti (11) en jouxtant latéralement les ensembles (14) destinés à recevoir les connexions à épissure et/ou les connexions à raccordement.
